# EUROPEAN PATENT SPECIFICATION

(11) **EP 1 661 287 B1**
(45) Date of publication and mention of the grant of the patent: **05.10.2011**
(21) Application number: 04780532.0
(22) Date of filing: 06.08.2004
(51) Int. Cl.: H04L 1/16, H04L 12/28

(54) **SDMA COMMUNICATIONS WITH NON-IMMEDIATE BLOCK ACKNOWLEDGMENT**
SDMA-KOMMUNIKATION MIT NICHT AUGENBLICKLICHER BLOCKBESTÄTIGUNG
COMMUNICATIONS A ACCES MULTIPLE PAR REPARTITION SPATIALE AVEC ACCUSE DE RECEPTION DE BLOCS DE DONNEES NON IMMEDIAT

(30) Priority: 08.08.2003 US 493937 P; 15.12.2003 US 737639
(43) Date of publication of application: 31.05.2006
(73) Proprietor: Intel Corporation, Santa Clara, CA 95052 (US)
(72) Inventor: STEPHENS, Adrian P., Cottonham, Cambridge CB4 8TA (GB); LI, Qinghua, Sunnyvale, CA 940873 (US); LIN, Xintian E., Mountain View, CA 94043 (US); HO, Minnie, Los Altos, CA 94022 (US)
(74) Representative: Dunlop, Hugh Christopher
(86) International application number: PCT/US2004/025710
(87) International publication number: WO 2005/015812

(56) References cited:
- WO-A-02/41647
- WO-A1-00/33502
- WO-A1-00/33502
- US-A- 5 528 605

## Description

### BACKGROUND

To address the problem of ever-increasing bandwidth requirements that are placed on wireless data communications systems, various techniques are being developed to allow multiple devices to communicate with a single base station by sharing a single channel. In one such technique, a base station may transmit or receive separate signals to or from multiple mobile devices at the same time on the same frequency, provided the mobile devices are located in sufficiently different directions from the base station. For transmission from the base station, different signals may be simultaneously transmitted from each of separate spaced-apart antennas so that the combined transmissions are directional, i.e., the signal intended for each mobile device may be relatively strong in the direction of that mobile device and relatively weak in other directions. In a similar manner, the base station may receive the combined signals from multiple independent mobile devices at the same time on the same frequency through each of separate spaced-apart antennas, and separate the combined received signals from the multiple antennas into the separate signals from each mobile device through appropriate signal processing so that the reception is directional.

Under currently developing specifications, such as IEEE 802.11 (IEEE is the acronym for the Institute of Electrical and Electronic Engineers, 3 Park Avenue, 17th floor, New York, New York), each mobile device may transmit a data block of variable length, and then wait for a predetermined timeout period after the data block for an acknowledgment from the base station to signify that the base station received the data block. If the base station transmits and receives on the same frequency, that fact may preclude the base station from transmitting and receiving at the same time, so that the base station waits until all incoming data blocks are complete before sending out any acknowledgments. However, since the data blocks are of variable length, a mobile device sending a short data block may experience an acknowledgment timeout while the base station is still receiving a long data block from another mobile device. The resulting unnecessary retransmission of the short data block may cause inefficiencies in the overall data communications, and under some circumstances may even result in a service interruption.
WO 02/41647 A describes an apparatus and method for facilitating SDMA operation of packet communication system, wherein determinations are made of at least the relative sizes of data to be communicated, and responsive to such determinations, a time period is selected during which the data is to be communicated.
US-A-5 528 605 describes a delayed acknowledgment in an asymmetric timer based LAN communications protocol, wherein a communication pathway is provided for sending aggregated data from a master to a slave upon expiration of a circuit timer interval, and an acknowledgment circuit is provided for the slave to send an acknowledgment message to the master upon expiration of a delay ACK time interval.

### BRIEF DESCRIPTION OF THE DRAWINGS

The invention may be understood by referring to the following description and accompanying drawings that are used to illustrate embodiments of the invention. In the drawings:
Fig. 1 shows a diagram of a communications network, according to an embodiment of the invention.
Fig. 2 shows a timing diagram of a communications sequence involving a base station and two mobile devices, according to an embodiment of the invention.
Fig. 3 shows a flow chart of a method that may be performed by a base station, according to an embodiment of the invention.
Fig. 4 shows a flow chart of a method that may be performed by a mobile device, according to an embodiment of the invention.
Fig. 5 shows a block diagram of a base station, according to an embodiment of the invention.
Fig. 6 shows a block diagram of a mobile device, according to an embodiment of the invention.
Fig. 7 shows communications formats that may be used in a communications sequence, according to an embodiment of the invention.

### DETAILED DESCRIPTION OF THE INVENTION

In the following description, numerous specific details are set forth. However, it is understood that embodiments of the invention may be practiced without these specific details. In other instances, well-known methods, structures and techniques have not been shown in detail in order not to obscure an understanding of this description.

References to "one embodiment", "an embodiment", "example embodiment", "various embodiments", etc., indicate that the embodiment(s) of the invention so described may include a particular feature, structure, or characteristic, but not every embodiment necessarily includes the particular feature, structure, or characteristic. Further, repeated use of the phrase "in one embodiment" does not necessarily refer to the same embodiment, although it may.

In the following description and claims, the terms, "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are either in direct physical or electrical contact, or that two or more elements are not in direct contact with each other but yet still co-operate or interact with each other.

As used herein, unless otherwise specified the use of the ordinal adjectives "first", "second", "third", etc., to describe a common object, merely indicate that different instances of like objects are being referred to, and are not intended to imply that the objects so described must be in a given sequence, either temporally, spatially, in ranking, or in any other manner.

Unless specifically stated otherwise, as apparent from the following discussions, it is appreciated that throughout the specification discussions utilizing terns such as "processing," "computing," "calculating," or the like, refer to the action and/or processes of a computer or computing system, or similar electronic computing device, that manipulate and/or transform data represented as physical, such as electronic, quantities into other data similarly represented as physical quantities.

In a similar manner, the term "processor" may refer to any device or portion of a device that processes electronic data from registers and/or memory to transform that electronic data into other electronic data that may be stored in registers and/or memory. A "computing platform" may comprise one or more processors.

In the context of this document, the term "wireless" and its derivatives may be used to describe circuits, devices, systems, methods, techniques, communications channels, etc., that may communicate data through the use of modulated electromagnetic radiation through a non-solid medium. The term does not imply that the associated devices do not contain any wires, although in some embodiments they might not.

In keeping with common industry terminology, the terms "base station", "access point", and "AP" may be used interchangeably herein to describe an electronic device that may communicate wirelessly and substantially simultaneously with multiple other electronic devices, while the terms "mobile device" and "STA" may be used interchangeably to describe any of those multiple other electronic devices, which may have the capability to be moved and still communicate, though movement is not a requirement. Similarly, the terms "spatial division multiple access" and SDMA may be used interchangeably. As used herein, these terms are intended to encompass any communication technique in which different signals may be transmitted by a combination of antennas simultaneously from the same device such that the combined transmitted signals result in different signals intended for different devices being transmitted in different directions on the same frequency, and/or techniques in which different signals may be received simultaneously through multiple antennas on the same frequency from different devices in different directions and the different signals may be separated from each other through suitable processing. The term "same frequency", as used herein, may include slight variations in the exact frequency due to such things as bandwidth tolerance, Doppler shift adaptations, parameter drift, etc. Two or more transmissions to different devices are considered simultaneous if at least a portion of each transmission to the different devices occurs at the same time, but does not imply that the different transmissions must start and/or end at the same time, although they may. Similarly, two or more receptions from different devices are considered substantially simultaneous if at least a portion of each reception from the different devices occurs at the same time, but does not imply that the different transmissions must start and/or end at the same time, although they may. Variations of the words represented by the term SDMA may sometimes be used by others, such as but not limited to substituting "space" for "spatial", or "diversity" for "division". The scope of various embodiments of the invention is intended to encompass such differences in nomenclature.

Some embodiments of the invention may comprise the transmission of a data burst from a mobile device to a base station, in which the data burst includes a request for a non-immediate block acknowledgment from the base station. A data burst may comprise one block of data, or multiple sequential blocks (sub-bursts) of data. A non-immediate acknowledgment may be an acknowledgment that can be delayed until a later time rather than being sent within a predetermined time after the end of the data that is being acknowledged. A block acknowledgment may be a single acknowledgment that acknowledges multiple sub-bursts rather than requiring a separate acknowledgment for each of the multiple sub-bursts. In some embodiments, a block acknowledgment may identify each of the sub-bursts that is being acknowledged, so that some sub-bursts may be acknowledged while others are not, even thought a single block acknowledgment is being used. Thus, a non-immediate block acknowledgment may acknowledge all or individual ones of a group of sub-bursts, and may be delayed until an appropriate acknowledgment time without causing acknowledgement timeouts for the individual sub-bursts.

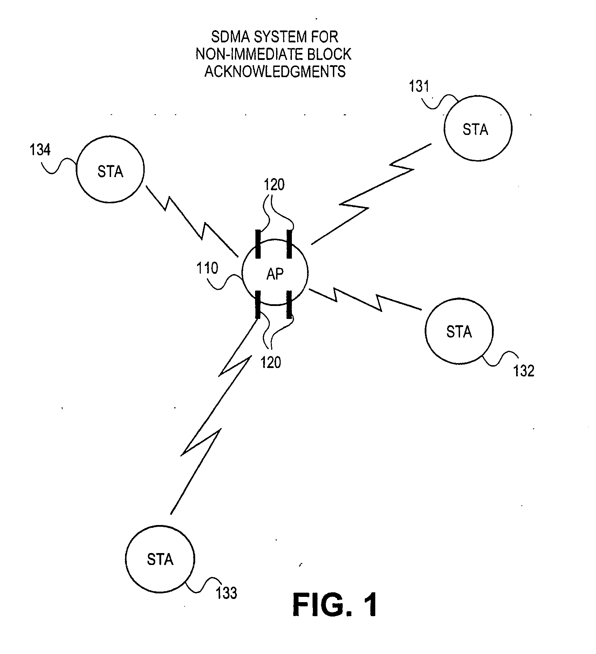

Fig. 1 shows a diagram of an SDMA communications network that may use non-immediate block acknowledgments in SDMA operations, according to an embodiment of the invention. The illustrated embodiment of a communications network shows an AP 110 that may communicate with multiple STAs 131-134 located in different directions from the AP. The AP 110 may transmit different signals to each of the STAs 131-134 substantially simultaneously, using SDMA techniques. Similarly, each STA 131-134 may transmit different signals to the AP 110 simultaneously, and the AP 110 may separate the combined received signals into the individual signals from each STA using SDMA techniques. Non-immediate block acknowledgments may be used to avoid potential timeouts that could occur if each STA expected to receive an acknowledgment to its transmission within a predefined timeout period that started immediately after the conclusion of that transmission.

Although AP 110 is shown with four antennas 120 to communicate wirelessly with up to four STAs at a time using SDMA techniques, other examples may have other arrangements (e,g., AP 110 may have two, three, or more than four antennas). Each STA may have at least one antenna to communicate wirelessly with the AP 110. In some examples the STA antenna(s) may be adapted to operate omnidirectionally, but in other examples STA antenna(s) may be adapted to operate directionally. In some examples the STAs may be in fixed locations, but in other examples at least some of the STAs may be moving during and/or between communications sequences. In some examples the AP may be in a fixed location, but in other examples the AP may be moving during and/or between communications sequences.

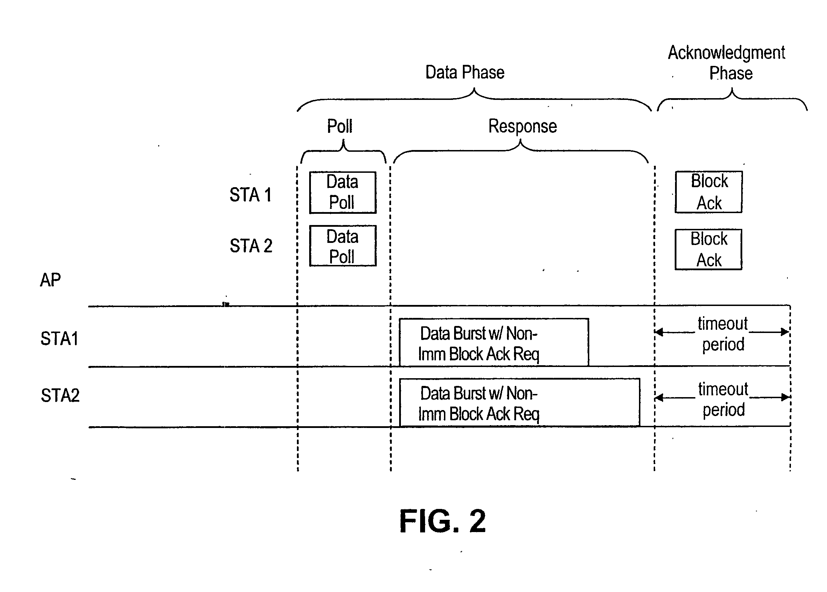

Fig. 2 shows a timing diagram of a communications sequence using non-immediate block acknowledgments, according to an embodiment of the invention. In Fig. 2, transmissions from a base station are on the line indicated as AP, while transmissions from two mobile devices are on the lines indicated as STA1 and STA2, respectively. The AP line is further sub-divided into spatial channels, labeled as STA 1 (directional transmissions from the base station to the mobile device STA1), STA 2 (directional transmissions from the base station to the mobile device STA2). Only two STAs are shown in Fig. 2, however, other examples may include any feasible number of STAs operating at the same time and following the sequence shown. Fig. 2 assumes that the AP is already enabled to communicate with multiple STAs at the same time using SDMA techniques, and any process that might have been used to create such enablement is not shown. Fig. 2 shows a data phase followed by an acknowledgment phase. During the data phase the AP may poll the STAs for data during the poll period, and the polled STAs may respond with data bursts to the AP during the response period, a data burst comprising one or more blocks of data transmitted in sucesssion. During the acknowledgment phase the AP may send a separate acknowledgment to each STA from which data was correctly received. The AP may withhold an acknowledgment to any STA from which data was not correctly received. Any one or more of the data phase, acknowledgment phase, poll period, and response period may have predetermined durations that are known by the AP and/or STAs. According to the invention, the length of the data phase is specified in the poll.

As shown in Fig. 2, the relevant STA's (those in the same poll group) may each be polled at the same time during the poll period using a defined poll format. The polls to the STAs are transmitted simultaneously using the directional capabilities of SDMA transmissions .

During the response period, each STA that received a poll may respond by sending a data burst to the AP. In some examples, each data burst may consist of multiple sub-bursts, with each sub-burst conforming to the format of a medium access control protocol data unit (MPDU). Because the SDMA format may not allow the AP to transmit and receive simultaneously, the AP may not transmit any acknowledgments to the data burst or any of the sub-bursts during the response period when the AP is receiving. Thus any acknowledgment of the data burst or any sub-bursts may wait until the acknowledgment phase, when a single acknowledgement to a given STA may be used to acknowledge the data burst from that STA. One of the sub-bursts, (e.g., the final MPDU) may specify whether any acknowledgment is requested, and if so, what type of acknowledgment.

According to the invention non-immediate block acknowledgment is requested. A block acknowledgment may acknowledge multiple sub-bursts with a single acknowledgment. A non-immediate acknowledgment may indicate that the AP will wait until after the data phase before sending the acknowledgment, even if the STA completed its transmission well before the end of the data phase. The non-immediate block acknowledgment request therefore may be a request for a single acknowledgment for the entire data burst, with the acknowledgment expected to be received at some time after the end of the data phase. In some examples the 'non-immediate' element may be specified in the acknowledgment request, but in other examples may be a required element with being specified in the acknowledgment request. In some embodiments, each STA may start a timeout period after the end of the data phase. If the expected acknowledgment is received before the end of that timeout, the STA may assume that the data burst was correctly received by the AP. If the expected acknowledgment is not received before the end of that timeout, the STA may assume that the data burst was not correctly received by the AP, and may take appropriate corrective action. In some examples, the corrective action may include retransmitting the data burst to the AP in response to a subsequent poll.

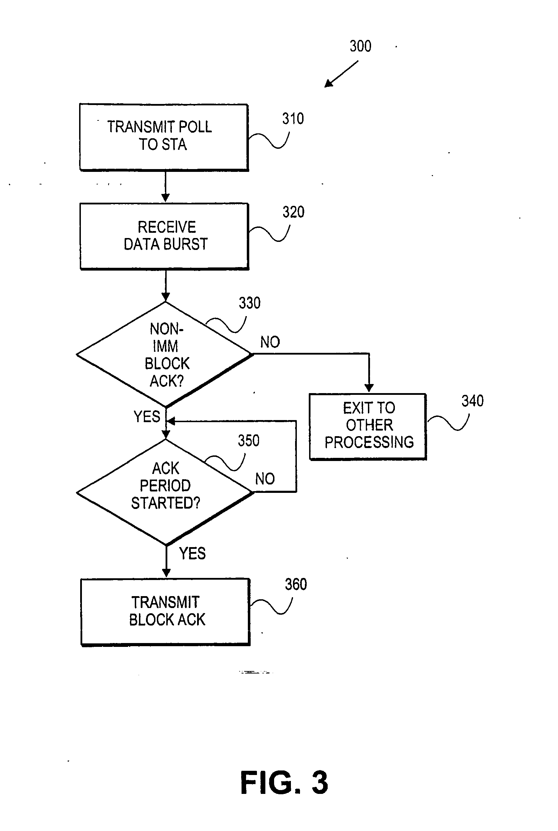

Fig. 3 shows a flow chart of a method of operation of a base station, according to an embodiment of the invention. The base station may transmit to, and/or receive from, multiple STAs simultaneously by using SDMA techniques, but for simplicity only the communications between one STA and the base station are described in the flow chart. In flow chart 300, the base station may transmit a poll to a STA at 310, requesting that the STA respond by sending a data burst. The data burst transmitted by the STA in response to the poll may be received at 320. At 330, the data burst may be examined for the presence of a request for a non-immediate (specified or inherently required) block acknowledgment. If no such request is found, or if a different type of acknowledgment is requested, control may exit at 340 to other processing not shown. If a non-immediate block acknowledgment is detected, there may be a delay at 350 until the data phase ends and the acknowledgment phase starts. The end of the data phase and/or the start of the acknowledgment phase may be determined in various ways, such as a hardware timer.

In some examples, the protocol being used may default to a non-immediate block acknowledgment format without the use of an acknowledgment request in the data burst, so that decision block 330 automatically defaults to 'yes'. During the acknowledgment period, a block acknowledgment may be transmitted to the relevant STA at 360.

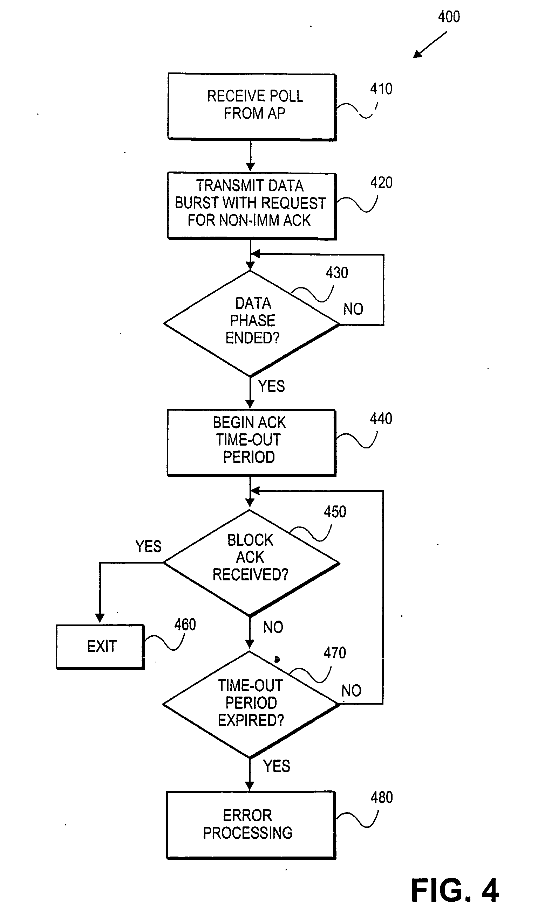

Fig. 4 shows a flow chart of a method of operation of a mobile device, according to an embodiments of the invention. In flow chart 400, at 410 the mobile device may receive a poll from a base station, triggering the mobile device to respond by transmitting a data burst at 420. In some examples the data burst may include a request for a non-immediate block acknowledgment, while in other examples, the protocol being used may default to a non-immediate block acknowledgment format without the use of such a request in the data burst. After completion of the data burst, the STA may wait at 430 until the end of the data period.

After the end of the data period, the STA may begin an acknowledgment timeout period at 440. In some examples the timeout period may be measured by a hardware timer, but other examples may use other techniques. If a block acknowledgment is received from the base station before the end of the timeout period as determined by the loop at 450 and 470, the timeout period may be cancelled and this processing exits at 460. However, if the block acknowledgment has not been received by the end of the timeout period, as determined by the loop at 450 and 470, control may move to some form of error processing at 480. Such error processing may include retransmitting the data burst after receiving a subsequent poll from the base station. In some examples blocks 440 - 480 may be applied to individual sub-bursts rather than to the data burst as a whole

The operations described above may include processes needed to cause a computer platform to perform the operations, such as but not limited to placing data into at least one transmit queue and/or reading data zoom at least one receive queue.

Embodiments of the invention may be implemented in one or a combination of hardware, firmware, and software. Embodiments of the invention may also be implemented as instructions stored on a machine-readable medium, which may be read and executed by a computing platform to perform the operations described herein. A machine-readable medium may include any mechanism for storing or transmitting information in a form readable by a machine (e.g., a computer). For example, a machine-readable medium may include read only memory (ROM); random access memory (RAM); magnetic disk storage media; optical storage media; flash memory devices; electrical, optical, acoustical or other form of propagated signals (e.g., carrier waves, infrared signals, digital signals, etc.), and others.

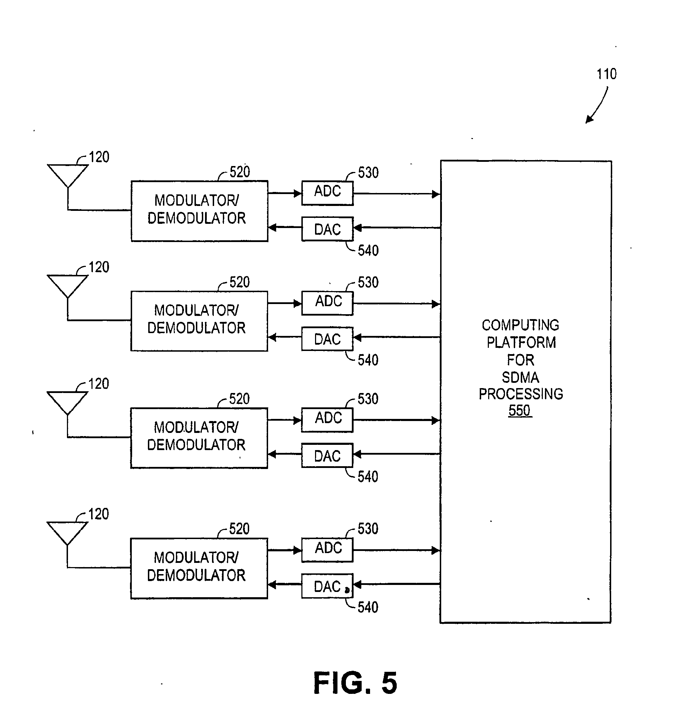

Fig. 5 shows a block diagram of a base station, according to an embodiment of the invention. Computing platform 550, which may perform processing suitable for a base station, may include one or more processors, and in some examples at least one of the one or more processors may be a digital signal processor (DSP). In the illustrated embodiment, AP 110 has four antennas 120, but other examples may have two, three, or more than four antennas. For each antenna, base station 110 may have a modulator/demodulator 520, an analog-to-digital converter (ADC) 530, and a digital-to-analog converter (DAC) 540. The combination of demodulator-ADC may convert received radio frequency signals from the antenna into digital signals suitable for processing by the computing platform 550. Similarly, the combination of DAC-modulator may convert digital signals from the computing platform 550 into radio frequency signals suitable for transmission through the antenna. Other components not shown may be included in the illustrated blocks as needed, such as but not limited to amplifiers, filters, oscillators, multiple quantities of ADCs and/or DACs where only one is shown, etc.

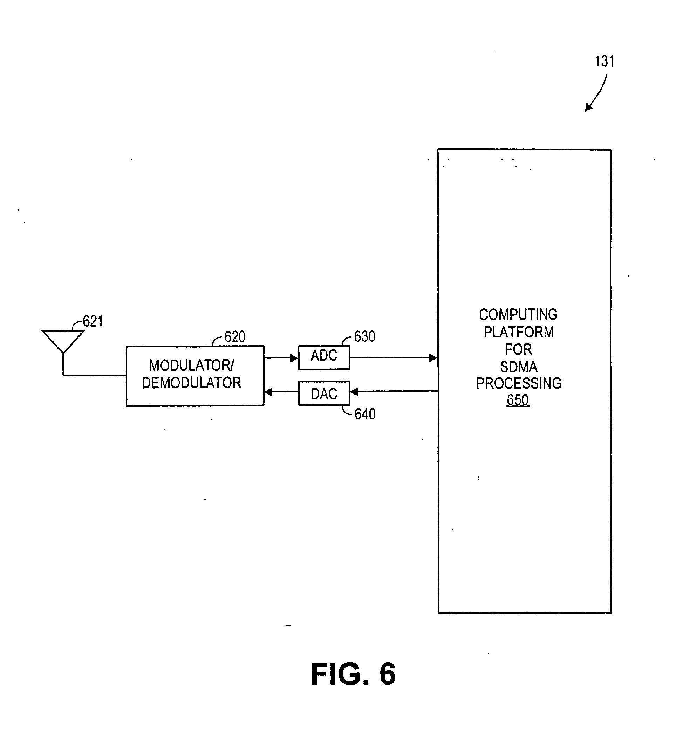

Fig. 6 shows a block diagram of a mobile device, according to an embodiment of the invention. The illustrated components of mobile device 131 may include a computing platform 650, antenna 621, modulator/demodulator 620, ADC 630, and DAC 640 that may be functionally similar to those similarly-named components of Fig. 5, but the device of Fig. 6 is shown with a single antenna/ modulator/demodulator/ ADC/ DAC combination, and the computing platform 650 may perform the operations previously described for a mobile device rather than a base station, although various embodiments of the invention are not limited in these respects;

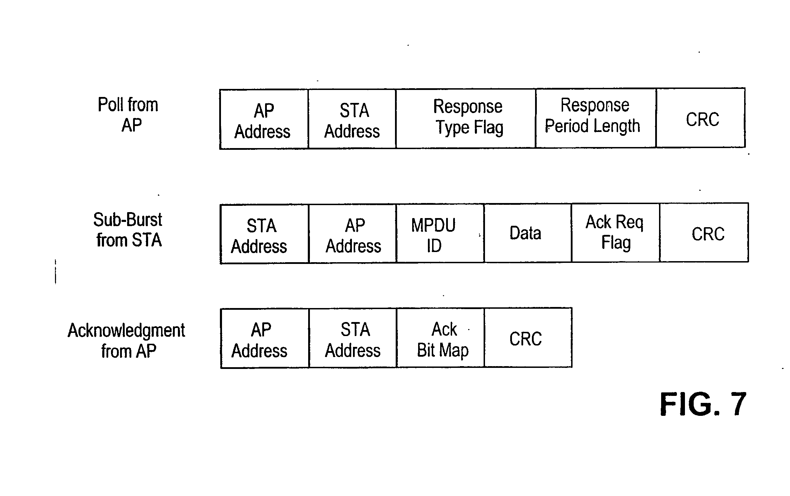

Fig. 7 shows some communications formats that may be used in particular embodiments of the invention, although other examples are not limited in this respect. Various examples may include some, all, or none of the illustrated elements of Fig. 7, and the order the elements may be different from that shown. Headers, trailers, and other elements needed to establish the start and end of a communications block are not shown. In the embodiment of Fig. 7:
1) All: Each transmission in the communications sequence may contain the address of the transmitting device and the address of the intended recipient. Because other APs and STAs may be within range, including these addresses may prevent confusion within the network.
2) Poll from AP: In addition to the aforementioned addresses, the poll may comprise a Response Type Flag indicating the type of response that is requested from the STAs (e.g., the STAs will wait until a predefined response period before responding, the response period beginning a pre-defined time period after the end of the poll). The poll may also comprise a Response Period Length (e.g., the response period lasts for the indicated length of time, and the STA must complete its response within that time period). Finally, the block may end with a validity check character to assure the block was received correctly (e.g., a cyclic redundancy check (CRC) character).
3) Sub-burst from STA: During the response period, the STA may respond with a data burst containing a series of multiple sub-bursts. In addition to the aforementioned addresses, each sub-burst may contain an identifier that uniquely identifies this particular sub-burst within the data burst (e.g., an MPDU ID number). After the data portion, the block may contain an acknowledgment request flag that indicates whether an acknowledgment is expected, and if so, what type of acknowledgment. For all but the last sub-burst, a 'no acknowledgment' flag may be used, indicating no acknowledgment is requested for these individual sub-bursts. For the last sub-burst, a block acknowledgment request may be indicated, indicating that a block acknowledgment is expected for the data burst as a whole. The request may specify a non-immediate block acknowledgment (i.e., an acknowledgment timeout period does not automatically begin immediately after the sub-burst containing the request). Alternatively, the non-immediate element may be an understood requirement that is built into the block acknowledgment format, so that the block acknowledgment is not expected until after the response period is over even though the request does not specify 'non-immediate'.
4) Acknowledgment from AP: In addition to the aforementioned addresses, the block acknowledgment from the AP may contain an acknowledgment bit map, with a separate bit in the bit map associated with each sub-burst. Each bit in the bit map may be asserted (e.g., a logic '1') if the associated sub-burst was correctly received by the AP, or may be de-asserted (e.g., a logic `0') if the associated sub-burst was not correctly received by the AP. Incorrect receipt may include, but is not limited to, such things as: a) the associated sub-burst was not received, b) the associated sub-burst failed a CRC check, c) the associated sub-burst had all incorrect format or was of an incorrect type, d) etc. In one example the bit map contains a pre-defined number of bits to accommodate the maximum allowed number of sub-bursts, but other examples may use other arrangements (e.g., the bit map may contain only as many bits as the data burst contained sub-bursts, the bit map may be sized and organized according to how the sub-bursts are identified, etc.). Finally, the acknowledgment block may contain a CRC character so that the STA may verify the acknowledgment block was correctly received.

The foregoing description is intended to be illustrative and not limiting. Variations may occur to those of skill in the art. Those variations are intended to be included in the various embodiments of the invention, which are limited only by the scope of the appended claims.

## Claims

1. An apparatus for use in a spatial division multiple access, SDMA, communication system, said apparatus comprising:
a first electronic device (131) including:
means (640, 620, 621) for transmitting (420) a data burst comprising one or more sub-bursts and a non-immediate block acknowledgement request during a data phase in response to a poll from a second electronic device (110);
means for beginning (440) a timeout period after an end of the data phase, wherein the length of time of the data phase is specified in the poll; and
means (621, 620, 630) for receiving (450) a block acknowledgment from the second electronic device during the timeout period, the block acknowledgement acknowledging one or more sub-bursts received.

2. The apparatus of claim 1, wherein the apparatus comprises:
a computing platform (650); and
a modulator/demodulator (620) coupled to the computing platform (650).

3. The apparatus of claim 2, wherein the apparatus further comprises an antenna (621) coupled to the modulator/demodulator (620).

4. The apparatus of claim 1, wherein the first electronic device (131) comprises a mobile device.

5. The apparatus of claim 1, wherein the second electronic device (110) comprises a base station.

6. An apparatus for use in a spatial division multiple access, SDMA, communication system, said apparatus comprising:
a first electronic device (110) including:
means (540, 520, 120) for transmitting (310) polls to multiple second electronic devices (131 - 134) simultaneously on a same frequency, wherein at least one of the polls contains an indicator of a length of time of a data phase of a particular one of the multiple second electronic devices;
means (120, 520, 530) for receiving (320) a non-immediate block acknowledgment request and a data burst comprising one or more sub-bursts from said particular one of the multiple second electronic devices (131 - 134) during the data phase, simultaneously with receiving other data bursts, each comprising one or more sub-bursts, from others of the multiple second electronic devices (131 - 134); and
means (540, 520, 120) for transmitting (360) a block acknowledgment to the particular second electronic device after the data phase using spatial division multiple access techniques, said block acknowledgement acknowledging one or more sub-bursts received.

7. The apparatus of claim 6, wherein the first electronic device (110) comprises:
a computing platform (550); and
at least four modulator/demodulators (520) coupled to the computing platform (550).

8. The apparatus of claim 7, wherein the first electronic device (110) further comprises at least four antennas (120), each antenna (120) coupled to at least one of the modulator/demodulators (520).

9. A method for data transmission in a spatial division multiple access, SDMA, communications system, comprising:
transmitting (310) a first poll to a first electronic device (131) and a second poll to a second electronic device (132), the polls designating the length of time of a respective data phase of said devices, simultaneously on a same frequency, wherein the first poll contains a value of a first time delay for the first electronic device to wait before beginning a timeout period for a first block acknowledgment, and the second poll contains a value of a second time delay for the second electronic device to wait before beginning a timeout period for a second block acknowledgment;
receiving (320) a first data burst comprising one or more sub-bursts from the first electronic device (131) and a second data burst comprising one or more sub-bursts from the second electronic device (132) simultaneously on the same frequency subsequent to said transmitting (310) during the data phase;
detecting (330) a non-immediate block acknowledgment request in at least one of the first and second data bursts; and
transmitting (360) a first block acknowledgment to the first electronic device (131) and a second block acknowledgment to the second electronic device (132) simultaneously on the same frequency using spatial division multiple access techniques, subsequent to said receiving (320), each of said first block acknowledgement and said second block acknowledgement acknowledging one or more sub-bursts received.

10. A method for data transmission in a spatial division multiple access, SDMA, communications system, comprising:
transmitting (420), during a data phase, a data burst comprising one or more sub-bursts in response to a poll from a base station, the data burst also comprising a non-immediate block acknowledgment request, wherein the poll contains an indicator of the length of time of the data phase; and
receiving (450) a block acknowledgment during a timeout period subsequent to the data phase, said block acknowledgment acknowledging one or more sub-bursts received.

11. A machine-readable medium that provides instructions, which when executed by a computing platform, cause said processing platform to perform operations comprising:
placing into a transmit queue a response to a poll received from an electronic device, the response comprising a data burst including one or more sub-bursts and a non-immediate block acknowledgment request, wherein the poll specifies the length of time of a data phase;
detecting an end to the data phase; and
reading from a receive queue a block acknowledgment in response to said transmitting, subsequent to said detecting, said block acknowledgment acknowledging one or more sub-bursts received.

12. The medium of claim 11, wherein the operation of placing comprises placing into the transmit queue a medium access control protocol data unit containing the block request.

13. The medium of claim 11, wherein the operation of placing comprises:
placing into a final one of the multiple sub-bursts a block acknowledgment request; and
placing into others of the multiple sub-bursts a no-acknowledgment request.

14. A machine-readable medium that provides instructions, which when executed by a computing platform, cause said processing platform to perform operations comprising:
placing into at least one transmit queue polls to multiple electronic devices (131-134), the polls designating the length of time of a respective data phase of said devices ;
receiving (320) data in data bursts, each data burst comprising one or more sub-bursts, from the multiple electronic devices (131 - 134) in at least one receive queue during the data phase;
detecting (330) a non-immediate block acknowledgment request in the received data from at least one of the multiple electronic devices (131 -134);
waiting until a predefined time period is ended according to the polls; and
placing into the at least one transmit queue a block acknowledgment to the at least one of the multiple electronic devices (131 - 134), said block acknowledgment acknowledging one or more sub-bursts received,
wherein at least one of the polls contains a value of a time delay for an associated one of the multiple electronic devices to wait before beginning a timeout period to receive the associated block acknowledgment.

15. The medium of claim 14, wherein the operation of receiving data includes receiving data from multiple medium access control protocol data units.

16. The medium of claim 14, wherein the operation of placing a block acknowledgment comprises placing multiple indicators in the block acknowledgment to acknowledge multiple correctly received portions of the received data.

17. The medium of claim 14, wherein the operations further comprise using spatial division multiple access techniques to transmit the block acknowledgment.

## Patentansprüche

1. Vorrichtung zur Verwendung in einem SDMA-Kommunikationssystem (SDMA = Spatial Division Multiplex Access, räumlicher Vieltachzugriff), wobei die Vorrichtung Folgendes umfasst:
ein erstes elektronisches Gerät (131), das Folgendes beinhaltet:
Mittel (640, 620, 621) zum Übertragen (420) eines Datenblocks, der ein oder mehrere Teildatenblöcke und eine nicht augenblickliche Blockbestätigungsanforderung umfasst, während einer Datenphase als Reaktion auf eine Abfrage von einem zweiten elektronischen Gerät (110);
Mittel zum Starten (440) einer Zeitüberschreitungsperiode nach einem Ende der Datenphase, wobei die Zeitdauer der Datenphase in der Abfrage festgelegt ist; und
Mittel (621, 620, 630) zum Empfangen (450) einer Blockbestätigung von dem zweiten elektronischen Gerät während der Zeitüberschreitungsperiode, wobei die Blockbestätigung einen oder mehrere empfangene Teildatenblöcke bestätigt.

2. Vorrichtung nach Anspruch 1, wobei die Vorrichtung Folgendes umfasst:
eine Rechenplattform (650) und
ein Modulator/Demodulator (620), der an die Rechenplattform (650) gekoppelt ist.

3. Vorrichtung nach Anspruch 2, wobei die Vorrichtung weiterhin eine Antenne (621) umfasst, die an den Modulator/Demodulator (620) gekoppelt ist.

4. Vorrichtung nach Anspruch 1, wobei das erste elektronische Gerät (131) ein tragbares Gerät umfasst.

5. Vorrichtung nach Anspruch 1, wobei das zweite elektronische Gerät (110) eine Basisstation umfasst.

6. Vorrichtung zur Verwendung in einem SDMA-Kommunikationssystem (SDMA Spatial Division Multiplex Access, räumlicher Vielfachzugriff), wobei die Vorrichtung Folgendes umfasst:
ein erstes elektronisches Gerät (110), das Folgendes beinhaltet:
Mittel (540, 520, 120) zum Übertragen (310) von Abfragen an mehrere zweite elektronische Geräte (131 - 134) gleichzeitig auf derselben Frequenz, wobei mindestens eine der Abfragen einen Indikator einer Zeitdauer einer Datenphase eines bestimmten der mehreren zweiten elektronischen Geräte enthält;
Mittel (120, 520, 530) zum Empfangen (320) einer nicht augenblicklichen Blockbestätigungsanforderung und eines Datenblocks, der ein oder mehrere Teildatenblöcke umfasst, von dem bestimmten der mehreren zweiten elektronischen Geräte (131 - 134) während der Datenphase, gleichzeitig mit dem Empfangen anderer Datenblöcke, wobei jeder ein oder mehrere Teildatenblöcke umfasst, von anderen der mehreren zweiten elektronischen Geräte (131 - 134); und
Mittel (540, 520, 120) zum Übertragen (360) einer Blockbestätigung an das bestimmte zweite elektronische Gerät nach der Datenphase unter Anwendung von räumlichen Vielfachzugrifftechniken, wobei die Blockbestätigung einen oder mehrere empfangene Teildatenblöcke bestätigt.

7. Vorrichtung nach Anspruch 6, wobei das erste elektronische Gerät (110) Folgendes umfasst:
eine Rechenplattform (550) und
mindestens vier Modulatoren/Demodulatoren (520), die an die Rechenplattform (550) gekoppelt sind.

8. Vorrichtung nach Anspruch 7, wobei das erste elektronische Gerät (110) weiterhin mindestens vier Antennen (120) umfasst, wobei jede Antenne (120) an mindestens einen der Modulatoren/Demodulatoren (520) gekoppelt ist.

9. Verfahren zur Datenübertragung in einem SDMA-Kommunikationssystem (SDMA = Spatial Division Multiplex Access, räumlicher Vielfachzugriff), wobei das Verfahren Folgendes umfasst:
Übertragen (310) einer ersten Abfrage an ein erstes elektronisches Gerät (131) und einer zweiten Abfrage an ein zweites elektronisches Gerät (132), wobei die Abfragen die Zeitdauer einer jeweiligen Datenphase der Geräte bezeichnen, gleichzeitig auf derselben Frequenz, wobei die erste Abfrage einen Wert einer ersten Zeitverzögerung für das erste elektronische Gerät zum Warten vor dem Starten einer Zeitüberschreitungsperiode für eine erste Blockbestätigung enthält, und die zweite Abfrage einen Wert einer zweiten Zeitverzögerung für das zweite elektronische Gerät zum Warten vor dem Starten einer Zeitüberschreitungsperiode für eine zweite Blockbestätigung enthält;
Empfangen (320) eines ersten Datenblocks, der ein oder mehrere Teildatenblöcke umfasst, von dem ersten elektronischen Gerät (131) und eines zweiten Datenblocks, der ein oder mehrere Teildatenblöcke umfasst, von dem zweiten elektronischen Gerät (132) gleichzeitig auf derselben Frequenz nach dem Übertragen (310) während der Datenphase;
Erfassen (330) einer nicht augenblicklichen Blockbestätigungsanforderung in mindestens einem des ersten und des zweiten Datenblocks und
Übertragen (360) einer ersten Blockbestätigung an das erste elektronische Gerät (131) und einer zweiten Blockbestätigung an das zweite elektronische Gerät (132) gleichzeitig auf derselben Frequenz unter Anwendung von räumlichen Vielfachzugrifftechniken nach dem Empfangen (320), wobei jede der ersten Blockbestätigung und der zweiten Blockbestätigung einen oder mehrere empfangene Teildatenblöcke bestätigt.

10. Verfahren zur Datenübertragung in einem SDMA-Kommunikationssystem (SDMA = Spatial Division Multiplex Access, räumlicher Vielfachzugriff), wobei das Verfahren Folgendes umfasst:
Übertragen (420), während einer Datenphase, eines Datenblocks, der ein oder mehrere Teildatenblöcke umfasst, als Reaktion auf eine Abfrage von einer Basisstation, wobei der Datenblock außerdem eine nicht augenblickliche Blockbestätigungsanforderung umfasst, wobei die Abfrage einen Indikator der Zeitdauer der Datenphase enthält; und
Empfangen (450) einer Blockbestätigung während einer Zeitüberschreitungsperiode nach der Datenphase, wobei die Blockbestätigung einen oder mehrere empfangene Teildatenblöcke bestätigt.

11. Maschinenlesbarer Datenträger, der Befehle bereitstellt, die bei Ausführung durch eine Rechenplattform bewirken, dass die Verarbeitungsplattform Vorgänge durchführt, die Folgendes umfassen:
Setzen einer Antwort auf eine Abfrage, die von einem elektronischen Gerät empfangen wurde, in eine Übertragungswarteschlange, wobei die Antwort einen Datenblock, der ein oder mehrere Teildatenblöcke beinhaltet, und eine nicht augenblickliche Blockbestätigungsanforderung umfasst, wobei die Abfrage die Zeitdauer einer Datenphase angibt;
Erfassen eines Endes der Datenphase und
Lesen einer Blockbestätigung aus einer Empfangswarteschlange als Reaktion auf das Übertragen nach dem Erfassen, wobei die Blockbestätigung einen oder mehrere empfangene Teildatenblöcke bestätigt.

12. Datenträger nach Anspruch 11, wobei der Vorgang des Setzens das Setzen eines Zugriffskontrollprotokoll-Datenelements, das die Blockanforderung enthält, umfasst.

13. Datenträger nach Anspruch 11, wobei der Vorgang des Setzens Folgendes umfasst:
Setzen einer Blockbestätigungsanforderung in einen letzten der mehreren Teildatenblöcke und
Setzen einer Keine-Bestätigung-Anforderung in andere der mehreren Teildatenblöcke.

14. Maschinenlesbarer Datenträger, der Befehle bereitstellt, die bei Ausführung durch eine Rechenplattform bewirken, dass die Verarbeitungsplattform Vorgänge durchführt, die Folgendes umfassen:
Setzen von Abfragen an mehrere elektronische Geräte (131 - 134) in mindestens eine Übertragungswarteschlange, wobei die Abfragen die Zeitdauer einer jeweiligen Datenphase der Geräte bezeichnet;
Empfangen (320) von Daten in Datenblöcken, wobei jeder Datenblock einen oder mehrere Teildatenblöcke umfasst, von den mehreren elektronischen Geräten (131 - 134) in mindestens einer Empfangswarteschlange während der Datenphase;
Erfassen (330) einer nicht augenblicklichen Blockbestätigungsanforderung in den empfangenen Daten von mindestens einem der mehreren elektronischen Geräte (131 - 134);
Warten, bis ein vorher festgelegter Zeitraum gemäß den Abfragen abgelaufen ist; und
Setzen einer Blockbestätigung an das mindestens eine der mehreren elektronischen Geräte (131 - 134) in die mindestens eine Übertragungswarteschlange, wobei die Blockbestätigung einen oder mehrere empfangene Teildatenblöcke bestätigt,
wobei mindestens eine der Abfragen einen Wert einer Zeitverzögerung für ein damit verbundenes der mehreren elektronischen Geräte zum Warten vor dem Starten einer Zeitüberschreitungsperiode zum Empfangen der damit verbundenen Blockbestätigung enthält.

15. Datenträger nach Anspruch 14, wobei der Vorgang des Empfangens von Daten das Empfangen von Daten von mehreren Zugriffskontrollprotokoll-Datenelementen beinhaltet.

16. Datenträger nach Anspruch 14, wobei der Vorgang des Setzens einer Blockbestätigung das Setzen mehrerer Indikatoren in die Blockbestätigung zum Bestätigen mehrerer korrekt empfangener Teile der empfangenen Daten umfasst.

17. Datenträger nach Anspruch 14, wobei die Vorgänge weiterhin das Anwenden von räumlichen Vielfachzugriffstechniken zum Übertragen der Blockbestätigung umfassen.

## Revendications

1. Appareil destiné à être utilisé dans un système de communication à accès multiple par répartition spatiale, SDMA, ledit appareil comprenant :
un premier dispositif électronique (131) comprenant :
un moyen (640, 620, 621) pour transmettre (420) une rafale de données comprenant une ou plusieurs sous-rafales et une demande d'accusé de réception de bloc de données non immédiat pendant une phase de données en réponse à une interrogation d'un second dispositif électronique (110) ;
un moyen pour commencer (440) une période de temporisation après une fin de la phase de données, dans laquelle la durée de la phase de données est spécifiée dans l'interrogation ; et
un moyen (621, 620, 630) pour recevoir (450) un accusé de réception de bloc de données du second dispositif électronique pendant la période de temporisation, l'accusé de réception de bloc de données accusant réception d'une ou plusieurs sous-rafales reçues.

2. Appareil selon la revendication 1, dans lequel l'appareil comprend :
une plateforme de calcul (650) ; et
un modulateur/démodulateur (620) couplé à la plateforme de calcul (650).

3. Appareil selon la revendication 2, dans lequel l'appareil comprend en outre une antenne (621) couplée au modulateur/démodulateur (620).

4. Appareil selon la revendication 1, dans lequel le premier dispositif électronique (131) comprend un dispositif mobile.

5. Appareil selon la revendication 1, dans lequel le second dispositif électronique (110) comprend une station de base.

6. Appareil destiné à être utilisé dans un système de communication à accès multiple par répartition spatiale, SDMA, ledit appareil comprenant :
un premier dispositif électronique (110) comprenant :
un moyen (540, 520, 120) pour transmettre (310) des interrogations à de multiples seconds dispositifs électroniques (131 à 134) simultanément sur une même fréquence, dans lequel au moins une des interrogations contient un indicateur d'une durée d'une phase de données d'un dispositif particulier parmi les multiples seconds dispositifs électroniques ;
un moyen (120, 520, 530) pour recevoir (320) une demande d'accusé de réception de bloc de données non immédiat et une rafale de données comprenant une ou plusieurs sous-rafales à partir dudit dispositif particulier parmi les seconds multiples dispositifs électroniques (131 à 134) pendant la phase de données, simultanément avec la réception d'autres rafales de données, chacune comprenant une ou plusieurs sous-rafales, à partir d'autres des multiples seconds dispositifs électroniques (131 à 134) ; et
un moyen (540, 520, 120) pour transmettre (360) un accusé de réception de bloc de données pour le second dispositif électronique particulier après la phase de données en utilisant des techniques d'accès multiple par répartition spatiale, ledit accusé de réception de bloc de données accusant réception d'une ou plusieurs sous-rafales reçues.

7. Appareil selon la revendication 6, dans lequel le premier dispositif électronique (110) comprend :
une plateforme de calcul (550) ; et
au moins quatre modulateurs/démodulateurs (520) couplés à la plateforme de calcul (550).

8. Appareil selon la revendication 7, dans lequel le premier dispositif électronique (110) comprend en outre au moins quatre antennes (120), chaque antenne (120) couplée à au moins un du modulateur/des démodulateurs (520).

9. Procédé pour la transmission de données dans un système de communication à accès multiple par répartition spatiale, SDMA, comprenant :
la transmission (310) d'une première interrogation à un premier dispositif électronique (131) et d'une seconde interrogation à un second dispositif électronique (132), les interrogations désignant la durée d'une phase de données respective desdits dispositifs simultanément sur une même fréquence, dans lequel la première interrogation contient une valeur d'un premier retard temporel pendant lequel le premier dispositif électronique doit attendre avant de commencer une période de temporisation pour un premier accusé de réception de bloc de données, et la seconde interrogation contient une valeur d'un second retard temporel pendant lequel le second dispositif électronique doit attendre avant de commencer une période de temporisation pour un second accusé de réception de bloc de données ;
la réception (320) d'une première rafale de données comprenant une ou plusieurs sous-rafales à partir du premier dispositif électronique (131) et une seconde rafale de données comprenant une ou plusieurs sous-rafales à partir du second dispositif électronique (132) simultanément sur la même fréquence à la suite de ladite transmission (310) pendant la phase de données ;
la détection (330) d'une demande d'accusé de réception de bloc de données non immédiat dans au moins une des première et seconde rafales de données ; et
la transmission (360) d'un premier accusé de réception de bloc de données au premier dispositif électronique (131) et d'un second accusé de réception de bloc de données au second dispositif électronique (132) simultanément sur la même fréquence en utilisant des techniques d'accès multiple par répartition spatiale, à la suite de ladite réception (320), chacun dudit premier accusé de réception de bloc de données et dudit second accusé de réception de bloc de données accusant réception d'une ou plusieurs sous-rafales reçues.

10. Procédé pour la transmission de données dans un système de communication à accès multiple par répartition spatiale, SDMA, comprenant :
la transmission (420), pendant une phase de données, d'une rafale de données comprenant une ou plusieurs sous-rafales en réponse à une interrogation à partir d'une station de base, la rafale de données comprenant aussi une demande d'accusé de réception de bloc de données non immédiat, dans lequel l'interrogation contient un indicateur de la durée de la phase de données ; et
la réception (450) d'un accusé de réception de bloc de données pendant une période de temporisation à la suite de la phase de données, ledit accusé de réception de bloc de données accusant réception d'une ou plusieurs sous-rafales reçues.

11. Support lisible par machine qui fournit des instructions, qui lorsqu'elles sont exécutées par une plate-forme d'ordinateur, conduisent ladite plateforme de traitement à réaliser les opérations comprenant :
le placement dans une file d'attente de transmission d'une réponse à une interrogation reçue d'un dispositif électronique, la réponse comprenant une rafale de données comprenant une ou plusieurs sous-rafales et une demande d'accusé de réception de bloc de données non immédiat, dans lequel l'interrogation spécifie la durée d'une phase de données ;
la détection d'une fin pour la phase de données ; et
la lecture à partir d'une file d'attente de réception d'un accusé de réception de bloc de données en réponse à ladite transmission, à la suite de ladite détection, ledit accusé de réception de bloc de données accusant réception d'une ou plusieurs sous-rafales reçues.

12. Support selon la revendication 11, dans lequel l'opération de placement comprend le placement dans la file d'attente de transmission d'une unité de données de protocole de commande d'accès de support contenant la demande de bloc de données.

13. Support selon la revendication 11, dans lequel l'opération de placement comprend ;
le placement dans une sous-rafale finale parmi les multiples sous-rafales d'une demande d'accusé de réception de bloc de données ; et
la placement dans d'autres des multiples sous-rafales d'une demande de non-accusé de réception.

14. Support lisible par machine qui fournit des instructions, qui lorsqu'elles sont exécutées par une plateforme d'ordinateur, conduisent ladite plateforme de traitement à réaliser les opérations comprenant :
le placement, dans au moins une file d'attente de transmission, d'interrogations à de multiples dispositifs électroniques (131 à 134), les interrogations désignant la durée d'une phase de données respective desdits dispositifs ;
la réception (320) de données dans des rafales de données, chaque rafale de données comprenant une ou plusieurs sous-rafalcs, à partir des multiples dispositifs électroniques (131 à 134) dans au moins une file de réception pendant la phase de données ;
la détection (330) d'une demande d'accusé de réception de bloc de données non immédiat dans les données reçues à partir d'au moins un des multiples dispositifs électroniques (131 à 134) ;
une attente jusqu'à ce qu'une période temporelle prédéfinie soit terminée selon les interrogations ; et
le placement dans au moins une file de transmission d'un accusé de réception de bloc de données pour l'au moins un des multiples dispositifs électroniques (131 à 134), ledit accusé de réception bloc de données accusant réception d'une ou plusieurs sous-rafales reçues,
dans lequel au moins une des interrogations contient une valeur d'un retard temporel pendant lequel un des multiples dispositifs électroniques associé doit attendre avant de commencer une période de temporisation pour recevoir l'accusé de réception de bloc de données associé.

15. Support selon la revendication 14, dans lequel l'opération de réception des données comprend la réception des données à partir de multiples unités de données de protocole de commande d'accès de support.

16. Support selon la revendication 14, dans lequel l'opération de placement d'un accusé de réception de bloc de données comprend le placement de multiples indicateurs dans l'accusé de réception de bloc de données pour accuser réception de multiples parties reçues correctement des données reçues.

17. Support selon la revendication 14, dans lequel les opérations comprennent en outre l'utilisation de techniques d'accès multiple par répartition spatiale pour transmettre l'accusé de réception de bloc de données.
